## Europäisches Patentamt
### European Patent Office
### Office européen des brevets

(11) Veröffentlichungsnummer: **0 324 968**

**A1**

(12) **EUROPÄISCHE PATENTANMELDUNG**

(21) Anmeldenummer: **88121489.4**

(22) Anmeldetag: **22.12.88**

(51) Int. Cl.⁴: **C04B 28/26** , **C04B 38/02** ,
//(C04B28/26,14:30,18:06,18:14,
22:06,22:08,22:14,24:16)

(30) Priorität: **24.12.87 DE 3744210**

(43) Veröffentlichungstag der Anmeldung:
**26.07.89 Patentblatt 89/30**

(84) Benannte Vertragsstaaten:
**ES**

(71) Anmelder: **Bergwerksverband GmbH**
**Franz-Fischer-Weg 61**
**D-4300 Essen 13(DE)**

Anmelder: **HÜLS TROISDORF AG**
**Kölner Strasse 176**
**D-5210 Troisdorf(DE)**

(72) Erfinder: **Meyer, Frank, Dr.**
**Bogenstrasse 10**
**D-4300 Essen 15(DE)**
Erfinder: **Mehesch, Hans, Dr.**
**Frillendorfer Höhe 38**
**D-4300 Essen 1(DE)**
Erfinder: **Cornely, Wolfgang, Dr.**
**Lohstrasse 30**
**D-4390 Gladbeck(DE)**
Erfinder: **Fischer, Martin**
**Siepenstrasse 4**
**D-4200 Oberhausen(DE)**
Erfinder: **Riecks, Birgit**
**Bentheimer Strasse 4**
**D-4300 Essen 1(DE)**
Erfinder: **Neuschäffer, Karlheinz, Dr.**
**Böttnerstrasse 6**
**D-5653 Leichlingen(DE)**

(54) **Wasserhaltige, härtbare Schaummassen aus anorganischen Bestandteilen und Verfahren zu ihrer Herstellung.**

(57) Härtbare Schaummassen aus Sauerstoff abspaltenden Schäummitteln, einem Härter aus Alkalisilikatlösung und einem damit reaktionsfähigen feinkörnigen Feststoff, nämlich einem aus Filterstaub abgeschiedenen Oxid-Gemisch aus $SiO_2$ und $Al_2O_3$, einer Elektrofilterasche aus Hochtemperatur-Kraftwerken, kalziniertem Bauxit oder amorpher Kieselsäure bilden verbesserte, schneller härtende bzw. festere Schäume durch Zusatz von Reaktionsbeschleunigern, wobei Reduktionsmittel, besonders reduzierend wirkende Schwefelverbindungen bevorzugt oder Oxidationsmittel oder feinteilige Stoffe wie Ruß oder Farbpigmente wirksam sind.

EP 0 324 968 A1

## Wasserhaltige, härtbare Schaumassen aus anorganischen Bestandteilen und Verfahren zu ihrer Herstellung

Die Erfindung betrifft fließfähige, wasserhaltige Schaummassen auf Basis von alkalihaltigen, anorganischen Bestandteilen, welche unter Zusatz eines Sauerstoff abspaltenden Schäummittels Schaummassen bilden sowie das Verfahren zur Herstellung solcher Massen.

Aus der europäischen Patentanmeldung 83 11 24 58.1 sind wasserhaltige, härtbare Formassen bekannt, welche aus Alkalisilikatlösungen, denen gegebenenfalls Alkalihydroxid zugesetzt ist und einem wasserfreien, feinteiligen Oxid-Gemisch herzustellen sind, das als Hauptbestandteile $SiO_2$ in Mengen von 7 bis 75 Gew.-% und $Al_2O_3$ in Mengen von 12 bis 87 Gew.-% enthält. Diese Oxid-Gemisch entsteht als Staub bei industriellen Schmelzprozessen. Füllstoffe sind diesen Formassen zusetzbar. Solche Formassen härten bei Temperaturen von 50 bis 150° C zu Formkörpern mit erheblicher Festigkeit.

Die Härtung der Formmassen zu Formkörpern erheblicher Festigkeit schon bei niedriger Temperatur und hohen Wassergehalten ohne die Erfordernis eines Brennprozesses, jedoch mit der Möglichkeit, die Formkörper hohen Temperaturen auszusetzen, erfordert offenbar feste Reaktionskomponenten ganz bestimmter Art.

Nach der europäischen Patentanmeldung 86 10 32 42.3 können die festen Reaktionskomponenten auch kalzinierter Bauxit oder eine glasartige amorphe Elektrofilterasche sein, welche aus Hochtemperatur-Steinkohlekraftwerken stammt. Die reaktionsfähigen Feststoffe liegen in feiner Verteilung vor. Der kalzinierte Bauxit und die Füllstoffe werden gemahlen.

Diesen Formassen können Schäummittel zugesetzt werden, besonders Peroxide als anorganische oder organische Peroxide, Percarbonate und besonders als $H_2O_2$.

Die Schäumreaktion unter Verwendung von Sauerstoff abspaltenden Schäummitteln erfolgt in Abhängigkeit von der Art und Menge des Peroxids in exothermer Reaktion durch Einwirkung von enthaltenem Alkali oder benötigt eine Erwärmung von außen bis zur Anspringtemperatur, was ungleichmäßige Aushärtung bei großen Formkörpern zur Folge haben kann. Die Schäumung und Härtung erfolgt vergleichsweise langsam und ergibt nicht immer feinporige Schaumkörper mit gleichmäßigen Poren. Eine nachträgliche Erwärmung von außen ist z. B. in nichtstationären Anlagen bzw. bei Anwendung als Ortsschaum beim Füllen von Profilen, Kanälen oder ähnlichen Hohlräumen nicht möglich.

Der Erfindung liegt die Aufgabe zugrunde, wasserhaltige, härtbare Schaummasse und ein Verfahren zu ihrer Herstellung zur Verfügung zu stellen, bei dem eine Wärmezufuhr von außen nicht nötig ist und schnelle Härtung erfolgt, wobei gleichzeitig niedrige Dichte und hohe Festigkeit durch Feinporigkeit erreicht werden soll.

Diese Aufgabe wird durch die wasserhaltige, härtbare Schaummasse gemäß Patentanspruch und durch das Verfahren zu ihrer Herstellung nach dem Verfahrensanspruch sowie den Unteransprüchen gelöst.

Erfindungsgemäß werden als Sauerstoff abgebende Schäummittel ein Peroxid und sehr bevorzugt $H_2O_2$ eingesetzt, insbesondere als 5 bis 25 gew.-%ige wäßrige Lösung. die Menge des Schäummittels, berechnet als $H_2O_2$, soll 0,2 bis 5,0 Gew.-%, vorzugsweise 0,3 bis 3,0 Gew.-%, bezogen auf die Schaummasse, betragen.

Die reagierenden Bestandteile der Schaummasse sind nach Art und Menge dieselben feinteiligen reaktionsfähigen Feststoffe und derselbe Härter in Form von Alkalisilikatlösung mit gegebenenfalls Gehalten von Alkalihydroxid wie gemäß dem genannten Stand der Technik. Bevorzugt ist der reaktionsfähige Feststoff ein feinteiliges Oxidgemisch mit analytischen Gehalten von 7 bis 75 Gew.-% amorphem, nicht glasartigem $SiO_2$ und 12 bis 87 Gew.-% $Al_2O_3$ mit geringen kristallinen Anteilen, welches bei Hochtemperaturprozessen, z. B. beim Schmelzen von Korund, als Filterstaub abgeschieden wird.

Einsetzbar ist auch Elektrofilterasche von Steinkohlenkraftwerken mit Brennkammertemperaturen über 1600° C, welche analytische Gehalte von 45 bis 60 Gew.% $SiO_2$ in glasiger Form und 25 bis 35 Gew.-% amorphes $Al_2O_3$ neben beispielsweise $Fe_2O_3$ aufweist oder kalzinierter gemahlener Bauxit. Amorphe wasserhaltige oder ggf. entwässerte, pulverförmige Kieselsäure ist ebenfalls ein bevorzugter reaktionsfähiger Feststoff.

Es wurde gefunden, daß der Zusatz von vorzugsweise Reduktionsmitteln, sehr bevorzugt von reduzierend wirkenden Schwefelverbindungen, oder Oxidationsmitteln in feiner Verteilung oder von feinteiligen Stoffen mit großer innerer Oberfläche eine exotherme Reaktion mit den Peroxiden hervorruft und somit als Reaktionsbeschleuniger und Schäumungshilfsmittel wirkt. Die Temperaturerhöhung in dem Reaktionsgemisch führt zu einer Beschleunigung des Schäumens und der Härtung sowie zu einem sehr gleichmäßigen und feinzelligen Schaum von verminderter Dichte.

Besonders die bevorzugten Reduktionsmittel und in besonderem Maße die reduzierend wirkenden

2

Schwefelverbindungen erlauben es durch Variation des Reduktionsmittels und seiner Konzentration, die Aushärtezeit beliebig zu variieren und exakt vorher zu bestimmen.

Die Menge der zugesetzten Reaktionsbeschleuniger soll 0,1 bis 9, vorzugsweise 0,5 bis 5 Gew.-%, bezogen auf die Schaummasse, betragen.

Geeignete Reduktionsmittel sind in Form der reduzierend wirkenden Schwefelverbindungen, beispielsweise Alkalisulfit, Alkalipyrosulfit, Alkalidithionit, das Alkalisalz der Hydroxymethansulfinsäure (Rongalit), gegebenenfalls auch Alkalithiosulfat bzw. beispielsweise auch Alkaliphosphit oder Alkaliborhydrid als nicht Schwefel enthaltende Reduktionsmittel. Von den Alkaliverbindungen sind die Natriumverbindungen bevorzugt.

Geeignete Oxidationsmittel sind beispielsweise Chromate wie Alkalichromat oder -bichromat, Cu(II)-Salze oder Fe(III)-Salze wie die Chloride oder Sulfate. Die Oxidationsmittel rufen ebenfalls eine Temperaturerhöhung hervor.

Geeignete Stoffe mit großer innerer Oberfläche, beispielsweise von 200 bis 1600 m²/g nach BET sind u. a. Ruß, Eisenpigmente wie Eisenocker, Eisenoxidrot oder feinverteilte Eisenoxide.

Diese Stoffe beschleunigen erheblich die Zersetzung des Peroxids. Stoffe mit hoher BET-Oberfläche, z. B. größer als 1000 m²/g, sind bereits in sehr kleiner Menge wirksam und können ggf. in sehr kleiner Menge mit größeren Mengen eines Reduktionsmittels kombiniert werden und vermindern das Schaumgewicht und erhöhen die Feinheit des Schaums.

Durch die erfindungsgemäße Zugabe der Reaktionsbeschleuniger ist es gelungen, verbesserte Schaummassen herzustellen. Die Aushärtzeit ist besonders durch die Reduktionsmittel ohne Wärmezufuhr von außen besser steuerbar. Die so hergestellten Schäume haben eine feinere Schaumstruktur, so daß die mechanische Festigkeit gegenüber den aus dem Stand der Technik bekannten Schäumen verbessert wird.

Die festen Stoffe können getrennt voneinander oder bevorzugtals Feststoffmischung aus einem oder mehreren der reaktionsfähigen Feststoffe und einem oder mehreren inerten Füllstoffen bestehen.

Die Menge der reaktionsfähigen Feststoffe zu Füllstoffen beträgt bevorzugt 60 bis 100 zu 40 bis 0 Gew.-%.

Geeignete Füllstoffe sind vorzugsweise leichte Füllstoffe, beispielsweise Flugasche, Blähton, Vermiculit, Perlit, Glimmer, Quarzmehl, Basaltmehl, Talkum, Schiefermehl, Foamglas o. ä. und deren Mischungen.

Vorzugsweise beträgt die Menge des reaktionsfähigen Feststoffs 2,2 bis 7,0, sehr bevorzugt 2,5 bis 6,0 Gew.-Teile je Teil gelöstes $SiO_2$, soweit mittlere Wassergehalte, Alkaligehalte und Füllstoffgehalte eingestellt werden und die genannte Eigenschaftskombination von fest und leicht angestrebt wird sowie eine Pumpbarkeit erreicht werden soll.

Die beschleunigende Wirkung des Reduktionsmittels kommt erst im Moment der Schäummittelzugabe zur Wirkung, d. h. bis zu diesem Zeitpunkt ist die Reaktionsmasse je nach Zusammensetzung und Temperatur zwischen z. B. 10 und 120 Minuten ohne Aushärten stabil und transportierbar. Dadurch ist es möglich, daß die Masse ohne das Schäummittel zum Ort der Schäumung be fordert und dort das Schäummittel zugegeben wird. Dies ist besonders bei einem Einsatz im Untertage-Bergbau und im Tunnelbau von Vorteil. Es können Hohlräume aller Art, z. B. zur Erhaltung oder Wiederherstellung des Gebirgsverbundes sowie zu Abdichtungszwecken gefüllt werden, wobei die schäumende Masse auch z. B. in Spalten vordringt. Die Schäumung kann ohne Form, mit einer nur zeitweilig oder teilweise angebrachten, ggf. einfachen Form oder mit einer maßgenauen Form erfolgen, da der Schaum z. B. auch Hinterschneidungen füllt und maßgenau ohne Schwindung abbildet. Zum anderen können in ortsfesten Anlagen Serien von Schaumkörpern durch Füllen der Formen nacheinander von derselben Mischanlage für die Schaummasse aus durch Einfüllen über Leitungen oder dergleichen nacheinander hergestellt werden. Nach Erhärten hat der Schaum eine hohe Druckfestigkeit. Das Verfahren zur Herstellung der Schaummassen wird erfindungsgemäß so ausgeführt, daß nahe am Ort der Schäumung das Schäummittel bevorzugt als letzter Bestandteil zugegeben wird.

Der Reaktionsbeschleuniger wird bevorzugt dem Feststoff, der ggf. Füllstoff enthält, oder dem Härter durch Vermischen zugegeben.

## BEISPIELE

Zur Herstellung der Schaummassen wurden folgende Komponenten verwendet:

1. Alkalisilikatlösung

|  | SiO$_2$ | Na$_2$O | K$_2$O | (in Gew.-%) |
|---|---|---|---|---|
| Härter 1 | 23 | 6,8 | 16,5 | |
| Härter 2 | 26 | 18,0 | - | |
| Härter 3 | 25 | - | 27,0 | |
| Härter 4 | 24 | 8,6 | 12,4 | |

2. Feststoffmischung

| 1 | 64 Gew.-% | 01$^{x}$; | 36 Gew.-% Füllstoffe |
|---|---|---|---|
| 2 | 66 Gew.-% | 02$^{xx}$; | 34 Gew.-% Füllstoffe |
| 3 | 60 Gew.-% | E1$^{xxx}$; | 40 Gew.-% Füllstoffe |
| 4 | 69 Gew.-% | E2$^{xxxx}$; | 31 Gew.-% Füllstoffe |

x = reaktionsfähiger Feststoff Oxid-Gemisch mit 22 Gew.-% SiO$_2$, 77 Gew.-% Al$_2$O$_3$,

xx = reaktionsfähiger Feststoff Oxid-Gemisch mit 27 Gew.-% SiO$_2$, 82 Gew.-% Al$_2$O$_3$,

xxx = reaktionsfähiger Feststoff Oxid-Gemisch mit 40 Gew.-% SiO$_2$, 50 Gew.-% Al$_2$O$_3$,

xxxx = reaktionsfähiger Feststoff feinverteiltes amorphes SiO$_2$.

In den reaktionsfähigen Feststoffen sind 1 bis 10 % Nebenbestandteile als Oxide, z. B. Fe$_2$O$_3$, enthalten.

3. Reduktionsmittel

| Natriumdithionit | Na$_2$S$_2$O$_4$ |
|---|---|
| Natriumsulfid | Na$_2$S |
| Natriumpyrosulfit | Na$_2$S$_2$O$_5$ |
| Rongalit | NaSO$_2$CH$_2$OH |

4. Wasserstoffperoxidlösung, 10 gew.-%ig in Wasser.

## BEISPIEL 1

104 g Härter 1 und 128 g Feststoff 1 mit einem Gehalt an Reduktionsmittel, wie in der Tabelle 1 angegeben, werden in einem 0,5 1-Gefäß zu einer fließfähigen Masse gerührt. Anschließend werden 20 g Wasserstoffperoxidlösung eingerührt. Im Zentrum der sich entwickelnden Schaummasse wird der Temperaturverlauf gemessen. Feststoff 2 in der genannten Menge ergibt entsprechende Ergebnisse bei Verarbeitung der genannten Mengen Härter 1 und Härter 4.

## BEISPIELE 2

104 g Härter 1 und 128 g Feststoff 1 mit einem Gehalt an Reduktionsmittel, wie in der Tabelle 2 angegeben, werden in einem 0,5 1-Gefäß zu einer fließfähigen Masse gerührt. Anschließend werden 20 g Wasserstoffperoxidlösung eingerührt. Die Tabelle 2 gibt Reaktionszeiten und Materialkennwerte wieder.

Startzeit bezeichnet die Zeit vom Beginn des Mischvorgangs bis zum Beginn des Schäumens, Steigzeit bezeichnet die Zeit vom Beginn bis zum Ende des Schäumens, Gelierzeit bezeichnet die Zeit vom Beginn des Mischvorgangs bis zum Erstarren des Schaumes.

Das Raumgewicht gibt die Rohdichte des trockenen Schaums an. Die einaxiale Druckfestigkeit wird analog DIN 52105 an 60 mm-Würfeln gemessen.

Entsprechende Ergebnisse werden bei Kombination der genannten Mengen von Härter 2 und Feststoff 1 und Härter 3 mit den Feststoffen 3 und 4 erhalten. Entsprechende Ergebnisse werden auch erhalten bei Zugabe von 22 g einer 12 gew.-%igen Lösung $H_2O_2$.

## BEISPIEL 3

104 g Härter 1 werden mit 128 g Feststoff 1, dem 1,2 % Natriumdithionit beigefügt sind, gemischt. Das Gemisch ist nach 70 min nicht mehr pumpfähig und geliert nach 105 min.

## BEISPIEL 4

104 g Härter 1 werden mit 128 g Feststoff 1, dem 1,2 % Natriumdithionit beigefügt sind, gemischt. Nach 50 min werden 20 g Wasserstoffperoxidlösung zugegeben. Die Masse schäumt nach 15 s innerhalb von 70 s auf. Die Masse geliert nach 8'30". Die mittlere Rohdichte der trockenen Schaummasse beträgt 280 kg/m³. Die einaxiale Druckfestigkeit beträgt 0,54 n/mm².

## BEISPIEL 5

In einer Baustoff-Mischanlage werden 250 kg Feststoff, der 2,0 Gew.-% Rongalit enthält, in mehreren Chargen mit 203 kg Härter 1 gemischt. Aus einer ständig durchgerührten Vorlage wird die Suspension mit Hilfe einer Kolbenpumpe in einem 200 m langen Hochdruckschlauch von 25 mm Innendurchmesser mit einem Durchsatz von 25 kg/min gefördert. Simultan wird eine 10 gew.-%ige wäßrige Wasserstoffperoxidlösung aus einer Vorlage mit einem Durchsatz von 3 kg/min mit Hilfe einer Kolbenpumpe in einem 200 m langen Hochdruckschlauch von 10 mm Innendurchmesser gefördert und am Ende über eine achtstrahlige Ringdüse in den Suspensionsstrom eingebracht. Hinter der Ringdüse durchläuft das Gemisch einen Statikmischer und wird in einen zu verfüllenden Raum ausgetragen. Das Gemisch schäumt innerhalb von 40 s nach Austritt zu seinem 5-fachen Volumen auf. Innerhalb von 16 min läßt sich so ein Hohlraum von 1 m³ verfüllen. Nach 20 min ist der Schaum begehbar. Die nach einer Stunde ermittelte einaxiale Druckfestigkeit analog DIN 52105 beträgt 0,8 N/mm².

TABELLE 1

| Anteil Redukmittel Gew.-% | Na$_2$S$_2$O$_4$ | | Rongalit | | Na$_2$S$_2$O$_5$ | | Na$_2$S | |
|---|---|---|---|---|---|---|---|---|
| | GZ. min | Tm. °C | GZ. min | Tm. °C | GZ. min | Tm. °C | GZ. min | Tm. °C |
| 0 | 140' | 38 | 140' | 38 | 140 | 38 | 140' | 38 |
| 0,4 | 45' | 46 | 45' | 49 | 70 | 44 | 30 | 48 |
| 1,2 | 8'30" | 59 | 7' | 72 | 30' | 55 | 12' | 60 |
| 1,6 | 6' | 69 | 5' | 78 | 25' | 58 | 6' | 68 |
| 2,0 | 4' | 79 | 4' | 79 | 20' | 63 | 4' | 74 |
| 3,1 | 2' | 84 | 3'30" | 80 | 10' | 70 | 3' | 86 |
| 5,0 | 1' | 81 | 4'30" | 77 | 3'30" | 76 | 2' | 82 |

GZ.: Gelierzeit

Tm.: Temperatur max.

TABELLE 2

| Reduktionsmittel Gew.-% | Startzeit (s) | Steigzeit (s) | Gelierzeit (min) | Raumgewicht (kg/m$^3$) | einaxiale Druckfestigkeit (N/mm$^2$) |
|---|---|---|---|---|---|
| 0 | 15 | 200 | 140 | 260 | 0,19 |
| 1,2 % Natriumdithionit | 10 | 70 | 8,5 | 280 | 0,54 |
| 2,0 % Natriumdithionit | 9 | 40 | 4 | 330 | 0,72 |
| 1,2 % Rongalit | 10 | 60 | 6 | 300 | 0.58 |
| 2,0 % Rongalit | 9 | 40 | 4 | 345 | 1,03 |

## BEISPIELE 6 BIS 9

Entsprechend Beispiel 4 werden zu 120 g Härter 1 und 120 g Feststoff 2 bzw. 110 g Feststoff 4 folgende Reaktionsbeschleuniger gegeben:

| | |
|---|---|
| 0,8 Gew.-% Ruß (BET 1200 m$^2$/g) bzw. | - Beispiel 6 |
| 1,4 Gew.-% Eisenoxidrot bzw. | - Beispiel 7 |
| 1,8 Gew.-% Kaliumbichromat als Oxidationsmittel bzw. | - Beispiel 8 |
| 2,4 Gew.-% Eisen-III-Sulfat als Oxidationsmittel | - Beispiel 9 |

Die Masse schäumt nach 15 bis 45 s innerhalb von 50 bis 120 s nach Zugabe der H$_2$O$_2$-Lösung auf. Die Härtung erfolgt in 10 bis 60 Minuten.

## Ansprüche

1. Wasserhaltige, härtbare Schaummasse aus anorganischen Bestandteilen in fließfähiger Verteilung mit Anteilen von Füllstoffen und Sauerstoff abspaltenden Schäummitteln, wobei die Masse je Gewichtsteile gelöstes SiO$_2$ 0,7 bis 2,5 Gew.-Teile K$_2$O bzw. 0,55 bis 1,5 Gew.-teile Na$_2$O oder K$_2$O und Na$_2$O enthält, wobei K$_2$O bzw. Na$_2$O aus Alkalihydroxid, dessen wäßriger Lösung und/oder einer wäßrigen Lösung von Alkalisilikaten und gelöstes SiO$_2$ aus einer als Härter wirkenden wäßrigen Lösung von Alkalisilikaten enthält sowie als Feststoff 1,3 bis 10 Gew.-Teile Oxidgemisch mit Gehalten von amorphem $SiO_2$ und Aluminiomoxid und/oder glasartig amorphe Elektrofilterasche und/oder kalziniertem Bauxit und/oder ungelöstes $SiO_2$ aus einer amorphen dispers-pulverförmigen, entwässerten oder wasserhaltigen Kieselsäure, und Wassergehalte und Füllstoffe bis zum Erreichen der Fließfähigkeit, dadurch gekenneichnet, daß die Schaummasse zusätzlich als Reaktionsbeschleuniger ein Reduktionsmittel und/oder ein Oxidationsmittel und/oder einen feinteiligen Stoff mit größer innerer Oberfläche enthält.

2. Schaummasse nach Anspruch 1, dadurch gekennzeichnet, daß als Reduktionsmittel eine reduzierend wirkende Schwefelverbindung enthalten ist.

3. Schaummasse nach Anspruch 2, dadurch gekennzeichnet, daß Alkalisulfit enthalten ist.

4. Schaummasse nach Anspruch 2, dadurch gekennzeichnet, daß Alkalipyrosulfit enthalten ist.

5. Schaummasse nach Anspruch 2, dadurch gekennzeichnet, daß Alkalidithionit enthalten ist.

6. Schaummasse nach Anspruch 2, dadurch gekennzeichnet, daß Alkalithiosulfat enthalten ist.

7. Schaummasse nach Anspruch 2, dadurch gekennzeichnet, daß das Alkalisalz der Hydroxymethansulfinsäure enthalten ist.

8. Schaummasse nach Anspruch 1, dadurch gekennzeichnet, daß als Reduktionsmittel Alkaliborhydrid oder Alkaliphosphit enthalten ist.

9. Schaummasse nach Anspruch 1, dadurch gekennzeichnet, daß als Oxidationsmittel Chromat, Cu(II)-Salz oder Fe(III)-Salz enthalten ist.

10. Schaummasse nach Anspruch 1, dadurch gekennzeichnet, daß als feinteiliger Stoff Ruß, anorganische Farbpigmente oder Eisenoxide enthalten ist.

11. Schaummasse nach einem der Ansprüche 1 bis 10, dadurch gekennzeichnet, daß 0,1 bis 9, vorzugsweise 0,5 bis 5 Gew.-% eines Reaktionsbeschleunigers oder mehrerer, bezogen auf die Schaummasse, enthalten ist.

12. Verfahren zur Herstellung von Schaummassen nach einem der Ansprüche 1 bis 11, dadurch gekennzeichnet, daß dem Reaktionsgemisch ein Reaktionsbeschleuniger zugegeben wird.

13. Verfahren nach Anspruch 12, dadurch gekennzeichnet, daß der Reaktionsbeschleuniger durch Vermischen dem Feststoff oder dem Härter zugegeben wird.

14. Verfahren zur Herstellung von Schaummassen nach einem der Ansprüche 12 oder 13, dadurch gekennzeichnet, daß die Masse ohne das Schäummittel zum Ort der Schäumung gefördert und das Schäummittel am Ort der Schäumung oder unmittelbar vor der Verschäumung zugegeben wird.

15. Verwendung der Schaummasse nach Anspruch 1 und einem oder mehreren der Ansprüche 2 bis 11 zur Verfüllung von Hohlräumen im Berg- und Tunnelbau.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 148 280 (DYNAMIT NOBEL AG) <br> * Ansprüche; Seite 16, Zeilen 7-26 * <br> --- | 1,2,9 | C 04 B 28/26 <br> C 04 B 38/02 // <br> (C 04 B 28/26 |
| Y | DE-A-2 227 640 (BAYER AG) <br> * Anspruch 1; Seiten 3,4 * | 1,2,9 | C 04 B 14:30 <br> C 04 B 18:06 |
| A | * Seite 4 * <br> --- | 3,4,6 | C 04 B 18:14 |
| A | US-A-3 095 312 (S.T. HOLMES) <br> * Anspruch; Spalte 5, Zeile 2 * <br> --- | 1,10 | C 04 B 22:06 <br> C 04 B 22:08 <br> C 04 B 22:14 |
| A | DE-B-2 525 611 (KUNSTSTOFF-VERWERTUNG REMBERTI) <br> * Ansprüche 1,2,5 * <br> --- | 1 | C 04 B 24:16 ) |
| A | US-A-3 864 137 (W. VAN BONIN et al.) <br> * Spalte 4, Zeilen 34-41 * <br> --- | 1,9 | |
| A | EP-A-0 111 862 (DYNAMIT NOBEL AG) <br> * Ansprüche * <br> --- | 1 | |
| A | DE-A-3 512 588 (DYNAMIT NOBEL AG) <br> * Ansprüche * <br> --- | 1 | RECHERCHIERTE SACHGEBIETE (Int. Cl.4) |
| D,A | EP-A-0 199 941 (DYNAMIT NOBEL AG) <br> ----- | | C 04 B 28/24 <br> C 04 B 28/26 |

Der vorliegende Recherchenbericht wurde für alle Patentansprüche erstellt

| Recherchenort | Abschlußdatum der Recherche | Prüfer |
|---|---|---|
| BERLIN | 23-03-1989 | STROUD J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............................................................
& : Mitglied der gleichen Patentfamilie, übereinstimmendes Dokument

EPO FORM 1503 03.82 (P0403)